(19) **Europäisches Patentamt / European Patent Office / Office européen des brevets**

(11) **EP 4 557 389 A1**

(12) **EUROPEAN PATENT APPLICATION**

(43) Date of publication:
**21.05.2025 Bulletin 2025/21**

(21) Application number: **24205120.9**

(22) Date of filing: **07.10.2024**

(51) International Patent Classification (IPC):
$H01M\ 4/04^{(2006.01)}$    $H01M\ 4/133^{(2010.01)}$
$H01M\ 4/1393^{(2010.01)}$    $H01M\ 4/36^{(2006.01)}$
$H01M\ 4/583^{(2010.01)}$    $H01M\ 10/0525^{(2010.01)}$
$H01M\ 4/02^{(2006.01)}$

(52) Cooperative Patent Classification (CPC):
**H01M 4/043; H01M 4/0404; H01M 4/133;
H01M 4/1393; H01M 4/366; H01M 4/583;
H01M 10/0525;** H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.11.2023 KR 20230157450**

(71) Applicant: **SAMSUNG SDI CO., LTD.**
**Yongin-si, Gyeonggi-do 17084 (KR)**

(72) Inventors:
• **JUNG, Hyeseung**
**17084 Yongin-si (KR)**

• **KIM, Beom Kwon**
**17084 Yongin-si (KR)**
• **KIM, Soochan**
**17084 Yongin-si (KR)**
• **KIM, Minjun**
**17084 Yongin-si (KR)**
• **AN, Hoyong**
**17084 Yongin-si (KR)**
• **HONG, Minyoung**
**17084 Yongin-si (KR)**
• **JO, Gurnyoung**
**17084 Yongin-si (KR)**

(74) Representative: **Marks & Clerk LLP**
**15 Fetter Lane**
**London EC4A 1BW (GB)**

(54) **NEGATIVE ELECTRODE FOR RECHARGEABLE LITHIUM BATTERY AND RECHARGEABLE LITHIUM BATTERY INCLUDING SAME**

(57) Disclosed are a negative electrode for a rechargeable lithium battery and a rechargeable lithium battery including the same. The negative electrode includes a current collector, a negative active material layer including a first active material layer in contact with the current collector and a second active material layer on the first active material layer, wherein at least one active material layer of the first active material layer and the second active material layer includes pores, the pores including macropores having a size of about 1 $\mu$m or more and a porosity of the macropores is about 20% or more based on a total porosity 100% of the negative active material layer.

FIG. 1

EP 4 557 389 A1

## Description

## BACKGROUND

### 1. Field

Embodiments of this disclosure relate to a negative electrode for a rechargeable lithium battery and a rechargeable lithium battery including the same.

### 2. Description of the Related Art

Recently, the rapid advance of electronic devices such as mobile phones, laptop computers, and electric vehicles using batteries has resulted in surprising increases in interest for rechargeable batteries having relatively high capacity and lighter weight. Research and development for improving the performance of a rechargeable lithium battery is actively being carried out.

Rechargeable lithium batteries include a positive electrode and a negative electrode which include an active material being capable of intercalating and deintercalating lithium ions, and an electrolyte, and generate electrical energy due to the oxidation and reduction reaction if lithium ions are intercalated and deintercalated into the positive electrode and the negative electrode.

## SUMMARY

One or more embodiments of the present disclosure provide a negative electrode for a rechargeable lithium battery exhibiting excellent rate characteristics and cycle-life characteristics.

Some embodiments provide a rechargeable lithium battery including the negative electrode.

According to one or more embodiments, a negative electrode for a rechargeable lithium battery is provided, which includes a current collector; and a negative active material layer including a first active material layer in contact with the current collector and a second active material layer on the first active material layer, wherein at least one selected from the first active material layer and the second active material layer includes pores, the pores including macropores having a size of about 1 $\mu$m or more and a porosity of the macropores is about 20% or more based on a total porosity 100% of the negative active material layer.

According to some embodiments, a rechargeable lithium battery includes the negative electrode, a positive electrode including a positive active material, and a non-aqueous electrolyte.

At least some of the above and other features of the invention are set out in the claims.

Other embodiments are included in the following detailed description.

A negative electrode for a rechargeable lithium battery according to one or more embodiments may exhibit excellent high-rate charge and discharge characteristics and cycle-life characteristic.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

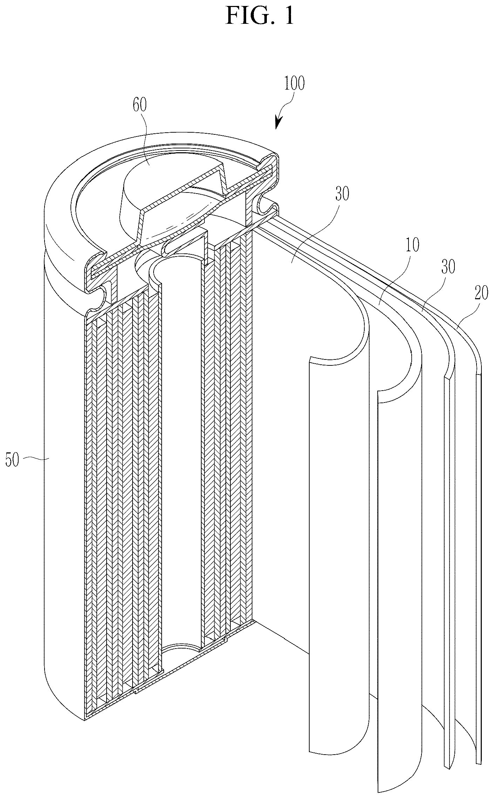

FIG. 1 to FIG. 4 are schematic diagrams showing rechargeable lithium batteries according to one or more embodiments.

## DETAILED DESCRIPTION

Hereinafter, embodiments are described in more detail. However, these embodiments are examples, the present disclosure is not limited thereto and the present disclosure is defined by the scope of the appended claims, and equivalents thereof.

As used herein, if a specific definition is not otherwise provided, it will be understood that if an element such as a layer, film, region, or substrate is referred to as being "on" another element, it can be directly on the other element or intervening elements may also be present.

Unless otherwise specified in this specification, what is indicated in the singular may also include the plural. Unless otherwise specified, "A or B" may mean "including A, including B, or including A and B".

As used herein, "combination thereof" means a mixture, laminate, composite, copolymer, alloy, blend, a reaction product, and/or the like of the constituents.

As used herein, when a definition is not otherwise provided, a particle diameter may be an average particle diameter. The particle diameter means the average particle diameter (D50), which means the diameter of particles having a cumulative volume of 50 volume% in the particle size distribution. The average particle size (D50) may be measured by any suitable method generally used in the art, for example, by a particle size analyzer, a transmission electron microscopic image, and/or a scanning electron microscopic image. In some embodiments, a dynamic light-scattering measurement device is used to perform a data analysis, and the number of particles is counted for each particle size range. From this, the average particle diameter (D50) value may be easily obtained through a calculation. In some embodiments, it may be measured using a laser diffraction method. If measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz having an output of 60 W are irradiated to calculate an average particle diameter (D50) on the basis of 50% of the particle diameter distribution in the measuring device.

A negative electrode for a rechargeable lithium battery according to one or more embodiments includes a current collector and a negative active material layer, and the negative active material layer includes a first active material layer in contact (e.g., physical contact) with the current collector and a second active material layer on the first active material layer. The first active material layer and the second active material layer include pores and at least one selected from the first active material layer and the second active material layer includes macropores having a size of about 1 $\mu$m or more. In one or more embodiments, a porosity of the macropores is about 20% or more based on a total porosity 100% (e.g., the macropores provide about 20% or more of the total porosity 100%). The total porosity refers to a volume% occupied by all pores formed in the negative active material layer. The negative active material layer includes pores having various suitable sizes, and these pores may include macropores having a size of about 1 $\mu$m or more.

In one or more embodiments, the porosity of about 20% or more of the macropores refers to a value obtained based on the total porosity of the negative active material layer.

If the porosity of the macropores is about 20% or more based on the total porosity 100% of the negative active material layer, the macropores included in the negative active may effectively or sufficiently absorb the volume expansion of the negative active material caused during charging and discharge, so that the cycle-life characteristic may be improved. The curvature of the negative active material layer is also reduced, thereby reducing ionic resistance and improving rate-capability. If macropores are not included in the negative active material layer or the porosity of the macropores is less than about 20% based on the total porosity 100% of the negative active material layer, the effect of suppressing or reducing the volume expansion by the macropores may be not obtained or may be not sufficient.

In one or more embodiments, the total porosity of the macropores in the negative active material layer may be about 20% to about 35%, or about 23% to about 32% based on the total porosity 100% of the negative active material layer. If the porosity of the macropores is within the foregoing ranges, the increase in the ionic resistance may be suppressed or reduced, thereby exhibiting improved rate-capability.

In one or more embodiments, the porosity and the porosity of the macropores may be determined by mercury intrusion porosimetry. For example, the intrusion according to a pore size, along with the porosity, may be confirmed by the mercury intrusion porosimetry, so that the total porosity and the porosity of the macropores may be separately obtained. For example, the porosity may be measured by the following procedures.

Mercury intrusion porosimetry utilizes the characteristic of mercury that does not wet solids to measure a total volume of pores, the size or distribution of the pores, and the surface area of the pores, by intruding mercury into pores of a sample by applying external pressure thereto. The mercury intrusion porosimetry may be performed using a mercury porosimeter.

In one or more embodiments, the macropores may be included in the first active material layer or may be included in the second active material layer, or may be also included in the first active material layer and the second active material layer. In some embodiments, the macropores may be included in the second active material layer.

A size of the macropores may be about 1 $\mu$m to about 5 $\mu$m, or about 1 $\mu$m to about 3 $\mu$m. If the size of the macropores satisfies the foregoing ranges, the ionic resistance may be reduced, thereby improving rate-capability.

The shape of the macropores may be a spherical shape, or may be any suitable shape such as a rod shape or an oval shape which is not a substantially complete sphere. A size of the pores may be a size of a long axis of the respective pore, and the size of the pores may be a value determined through mercury intrusion porosimetry.

In the negative active material layer of one or more embodiments, the total porosity may be about 15% to about 30%, about 19% to about 30%, or about 19% to about 25%. If the total porosity of the negative active material layer satisfies the foregoing ranges, suitable or appropriate capacity may be secured and good electrolyte impregnation may be achieved, thereby well maintaining the stability and the cycle-life characteristic of the battery.

In the negative active material layer, the porosity of the macropores may be about 3% to about 9%, about 3% to about 7%, or about 4% to about 6%. If the porosity of the macropores in the negative active material layer is within the foregoing ranges, the electrolyte impregnation may be more readily occurred (e.g., may be improved) and the ionic resistance may be further reduced.

The total porosity in the negative active material layer may be about 15% to about 30% and the porosity of the macropores may be about 3% to about 9%, so that the porosity of the macropores may be about 20% or more based on the total porosity 100% of the negative active material layer.

In one or more embodiments, the porosity may be a value measured through a mercury intrusion porosimetry method.

A thickness ratio of the first active material layer and the second active material layer may be about 5:5 to about 7:3, or about 5:5 to about 6:4. If the thickness ratio of the first active material layer and the second active material layer satisfies the foregoing ranges, mixing of the first active material layer and the second active material layer does not occur (or substantially does not occur) and the ionic resistance may be further reduced.

In one or more embodiments, a thickness of the first active material layer may be about 50 $\mu$m to about 100 $\mu$m, about 60 $\mu$m to about 120 $\mu$m, or about 70 $\mu$m to about 140 $\mu$m.

A thickness of the second active material layer may be about 50 $\mu$m to about 100 $\mu$m, about 40 $\mu$m to about 80 $\mu$m, or about 30 $\mu$m to about 60 $\mu$m.

While the thickness ratio of the first active material layer and the second active material layer is within the foregoing ranges, if the each layer has a thickness satisfying the any of the foregoing ranges, the mixing between the two active material layers does not occur (or substantially does not occur), and if suitable or appropriate electrode density may be realized, the ionic resistance may be further reduced.

The first active material layer and the second active material layer may include a negative active material including a carbon-based negative active material, a Si-based negative active material, or a combination thereof.

The carbon-based negative active material may include, for example, crystalline carbon, amorphous carbon, or a combination thereof. The crystalline carbon may be graphite such as an unspecified shaped, sheet shaped, flake shaped, spherical shaped, and/or fiber shaped artificial graphite and/or natural graphite, and the amorphous carbon may be soft carbon, hard carbon, mesophase pitch carbide, sintered cokes, and/or the like.

The Si-based negative active material may include silicon, a silicon-carbon composite, $SiO_x$ (0<x<2), a Si-Q alloy (the Q is an element selected from an alkali metal, an alkaline-earth metal, a Group 13 element, a Group 14 element (except for Si), a Group 15 element, a Group 16 element, a transition metal, a rare earth element, and a combination thereof), or combination thereof.

The silicon-carbon composite may be a composite of silicon and amorphous carbon. According to one or more embodiments, the silicon-carbon composite may include silicon particles and an amorphous carbon coated on the surface of the silicon particles. For example, it may include secondary particles (core) where silicon primary particles are agglomerated and an amorphous carbon coating layer (shell) on the surface of the secondary particles. The silicon particles and/or the silicon primary particles may be silicon nano particles.

The amorphous carbon may be between the silicon primary particles, for example, to coat on the silicon primary particles. The secondary particles may be distributed or dispersed in an amorphous carbon matrix.

A particle diameter of the silicon nanoparticles may be about 10 nm to about 1,000 nm, and according to some embodiments, it may be about 10 nm to about 200 nm, or about 20 nm to about 150 nm. If the particle size of the silicon nanoparticles is within the above ranges, excessive volume expansion that occurs during charging and discharging may be suppressed or reduced, and disconnection of the conductive path due to particle crushing during charging and discharging may be prevented or reduced.

In the amorphous carbon coating layer, the amorphous carbon may be soft carbon, hard carbon, a mesophase pitch carbonized product, sintered coke, or a combination thereof. A thickness of the amorphous carbon coating layer may be about 1 nm to about 2 $\mu$m, about 1 nm to about 500 nm, about 10 nm to about 300 nm, or about 20 nm to about 200 nm. If the thickness of the amorphous carbon coating layer is within the above ranges, silicon volume expansion may be well suppressed or reduced during charging and discharging.

The silicon-carbon composite may further include crystalline carbon. For example, the silicon-carbon composite may include a core including crystalline carbon and silicon particles, and an amorphous carbon coating layer on the surface of the core. The crystalline carbon may be unspecific-shaped, plate-shaped, flake-shaped, spherical and/or fibrous, such as natural graphite, artificial graphite, or a combination thereof.

If the silicon-carbon composite includes silicon nano particles and an amorphous carbon coating layer, based on the total 100 wt% of the silicon-carbon composite, an amount of the silicon nano particles may be about 30 wt% to about 70 wt%, or about 40 wt% to about 65 wt%. An amount of the amorphous carbon coating layer may be, based on the total 100 wt% of the silicon-carbon composite, about 30 wt% to about 70 wt% or about 35 wt% to about 60 wt%.

If the silicon-carbon composite further includes crystalline carbon, based on the total 100 wt% of the silicon-carbon composite, an amount of the silicon nano particles may be about 20 wt% to about 70 wt%, or about 25 wt% to about 65 wt%. Based on the total 100 wt% of the silicon-carbon composite, an amount of the amorphous carbon may be about 25 wt% to about 70 wt%, or about 25 wt% to about 60 wt%, and an amount of the crystalline carbon may be about 1 wt% to about 20 wt%, or about 5 wt% to about 15 wt%.

In one or more embodiments, the negative active material may include a carbon-based negative active material.

The carbon-based negative active material may include a crystalline carbon negative active material, for example, the first active material layer may include a natural graphite negative active material, and the second active material layer may include an artificial graphite negative active material. In some embodiments, the negative active material included in the first active material layer is natural graphite and the negative active material included in the second active material layer is artificial graphite.

The first active material layer and the second active material layer may further include a binder, and may further include a conductive material (e.g., an electrically conductive material).

In the first active material layer and the second active material layer, an amount of the negative active material may be, based on the total 100 wt% of the first active material layer or the second active material layer, about 90 wt% to about 99 wt%, or about 94 wt% to about 99 wt%.

In the first active material layer and the second active material layer, an amount of the binder may be, based on the total 100 wt% of the first active material layer or the second active material layer, about 0.5 wt% to about 5 wt%, or about 0.5 wt% to about 3 wt%. In the first active material layer and the second active material layer, an amount of the conductive material may be, based on the total, 100 wt% of the first active material layer or the second active material layer, about 0.5 wt% to about 5 wt%, or about 0.5 wt% to about 3 wt%.

The binder serves to well attach the negative electrode active material particles to each other and also to well attach the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a combination thereof.

If an aqueous binder is used, it may further include a cellulose-based compound, and this cellulose-based compound may be used together with the aqueous binder. The cellulose-based compound may be one or more selected from carboxymethyl cellulose, hydroxypropylmethyl cellulose, methyl cellulose, and an alkali metal salt thereof. The alkali metal may be Na, K, and/or Li. The cellulose-based compound may serve as a binder and/or as a thickener that may impart or increase viscosity. The cellulose-based compound may be used in a suitable or appropriate amount within the amount of the binder, but, for example, it may about 0.1 parts by weight to about 3 parts by weight based on 100 parts by weight of the negative active material.

The dry binder may be a polymer material capable of being fibrous (e.g., capable of being fibrillized or fiberized), and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity (e.g., electrical conductivity) to the electrode, and any suitable material that does not cause chemical change (e.g., does not cause an undesirable change in the rechargeable lithium battery) and conducts electrons may be used in the battery. Examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

The current collector may include a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

## Method of preparing negative electrode

The negative electrode according to one or more embodiments may be prepared by coating a first active material layer composition on a current collector and drying it to prepare a first active material dry layer, coating a second active material layer composition on the first active material dry layer and drying it to prepare a second active material dry layer, and pressurizing (e.g., pressing) them.

The first active material layer composition and the second active material layer composition includes an active material, a binder, and a solvent, and may further optionally include a conductive material (e.g., an electrically conductive material). The negative active material, the binder, and the conductive material are as described above. The solvent may be an organic solvent such as N-methyl pyrrolidone, or water, if the aqueous binder is used as the binder, water may be suitably used as the solvent.

The pressurization (e.g., the pressing) may reduce the thickness of the coated and dried negative active material layer to be a suitable or desired thickness. After preparing the negative active material layer as a two-layered structure of the first active material layer and second active material layer, the negative active material layer undergoes a pressurization (e.g., pressing) a plurality of times, for example, 2 (two) times or more, or 2 (two) to 3 (three) times, thereby preparing a negative electrode including a negative active material layer in which pores include macropores having a size of about 1 μm or more. The negative active material layer in which, based on the total porosity 100% of the negative active material layer, the porosity of the macropores may be about 20% or more, may be prepared. If the pressurization (e.g., the pressing) is performed only once, the porosity of the macropores of about 20% or more, is not formed, and thus, the effects by forming the macropores may not be realized. If the negative active material layer is prepared as a single layer, and then the pressurization (e.g., the pressing) is performed 2 (two) or more times, the porosity of the macropores of about 20% or more based on the total porosity 100% of the negative active material layer, may not be obtained.

If the desired thickness reduction rate due to pressurization (e.g., the pressing) is considered to be 100%, a first pressurization (e.g., a first pressing) may be performed to achieve a reduction rate of about 50% to about 90%, and a second pressurization (e.g., a second pressing) may be performed to achieve a reduction rate of 100%.

In some embodiments, the first pressurization (e.g., the first pressing) may be performed until a reduction rate reaches to about 30% to about 40%, the second pressurization (e.g., the second pressing) may be performed until a reduction rate reaches to about 60% to about 70%, and a third pressurization (e.g., a third pressing) may be performed until a reduction rate reaches to about 100%. If the pressurization is performed so that the reduction rate during the first pressurization, the second pressurization, and third pressurization satisfies the above conditions, the porosity of the macropores in the second active material layer may be about 20% or more based on the total porosity 100% of the negative active material layer. The macropores may be not formed in the first active material layer.

**Rechargeable lithium battery**

Another embodiment provides a rechargeable lithium battery including the negative electrode according to one or more embodiments, a positive electrode, and an electrolyte.

**Positive Electrode**

The positive electrode may include a current collector and a positive electrode active material layer on the current collector.

The positive electrode active material layer includes a positive electrode active material and may further include a binder and/or a conductive material (e.g., an electrically conductive material). For example, the positive electrode may further include an additive that can serve as a sacrificial positive electrode.

The positive electrode active material may include lithiated intercalation compounds that reversibly intercalate and deintercalate lithium ions. In some embodiments, at least one of a composite oxide of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any one of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

For example, the positive active material may be may be a high nickel-based positive active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may realize high capacity and may be applied to a high-capacity, high-density rechargeable lithium battery.

In the positive electrode, an amount of the positive active material may be about 90 wt% to about 98 wt% based on a total weight of the positive active material layer. Each amount of the binder and the conductive material may respectively be 1 wt% to 5 wt% based on a total weight of the positive active material layer.

The binder serves to well attach the positive active material particles to each other and also to well attach the positive active material to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is used to impart conductivity (e.g., electrical conductivity) to the electrode, and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder and/or a metal fiber; a conductive polymer (e.g., an electrically conductive polymer) such as a polyphenylene derivative; or a mixture thereof.

The current collector may include Al, but is not limited thereto.

### Electrolyte

The electrolyte includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvents may be used alone or in combination of two or more.

If using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, LiN $(C_xF_{2x+1}SO_2)(C_yF_{2y+1}SO_2)$, wherein x and y are integers of 1 to 20, lithium trifluoromethane sulfonate, lithium tetrafluoroethanesulfonate, lithium difluorobis(oxalato)phosphate (LiDFOB), and lithium bis(oxalato)borate (LiBOB).

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto.

The organic material and the inorganic material may be mixed together in one coating layer, or a coating layer including an organic material and a coating layer including an inorganic material may be stacked.

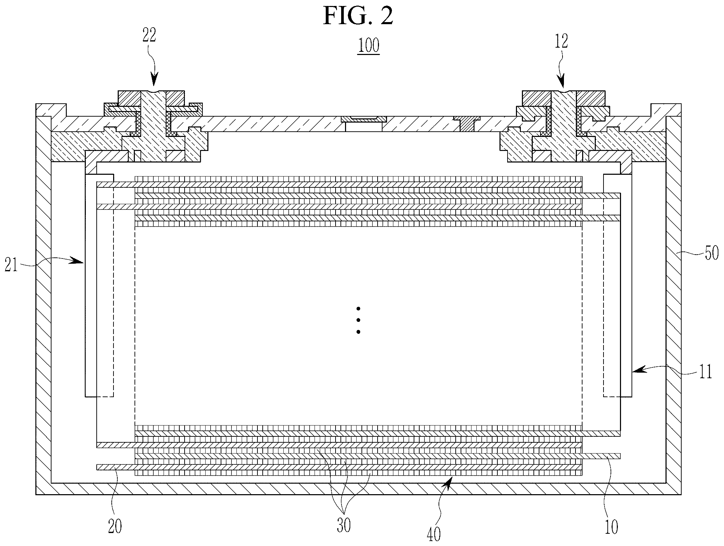

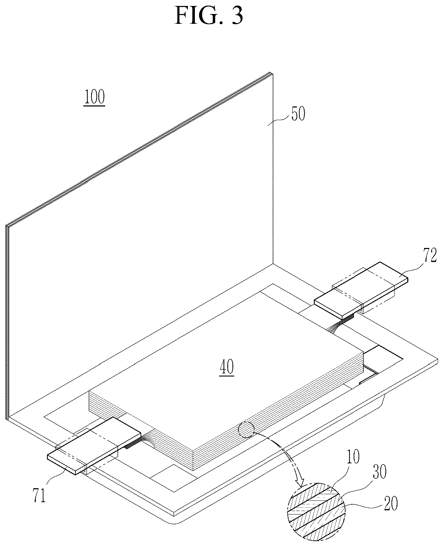

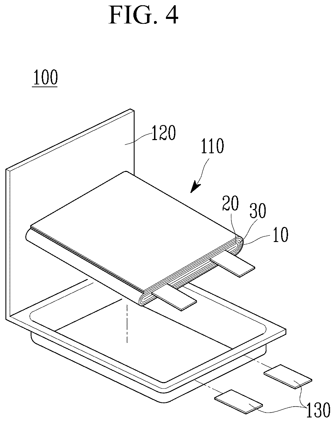

The rechargeable lithium battery may be classified into cylindrical, prismatic, pouch, coin, and/or the like depending on their shape. FIGS. 1-4 are schematic views illustrating a rechargeable lithium battery according to an embodiment. FIG. 1 shows a cylindrical battery, FIG. 2 is a cross-sectional view showing a prismatic battery, and FIGS. 3-4 show pouch-type batteries. Referring to FIGS. 1-4, the rechargeable lithium battery 100 includes an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 sealing the case 50 as shown in FIG. 1. In FIG. 2, the rechargeable lithium battery 100 may include a positive lead tab 11, a positive terminal 12, a negative lead tab 21, and a negative terminal 22. The rechargeable lithium battery 100 includes an electrode tab 70 (FIG. 4), for example, a positive electrode tab 71 and a negative electrode tab 72 (FIG. 3) serving as an electrical path for inducing the current formed in the electrode assembly 40 to the outside.

Hereinafter, examples of the present disclosure and comparative examples are described. These examples, however, are not in any sense to be interpreted as limiting the scope of the present disclosure.

**Example 1**

98 wt% of natural graphite, 1 wt% of a styrene-butadiene rubber, and 1 wt% of carboxymethyl cellulose were mixed together in a water solvent to prepare a first active material layer composition.

98 wt% of artificial graphite, 1 wt% of a styrene-butadiene rubber, and 1 wt% of carboxymethyl cellulose were mixed together in a water solvent to prepare a second active material layer composition.

On a Cu foil current collector, the first active material layer composition was coated and dried. Thereafter, the second active material layer composition was coated on the dried product and dried.

The resulting product was pressurized under a condition of a first reduction rate of about 50% (based on the desired thickness reduction rate 100%), and a second reduction rate of about 100% to prepare a negative electrode including a first active material layer having an 80 $\mu$m thickness and a second active material having an 80 $\mu$m thickness, formed on the current collector.

This procedure prepared pores including macropores having a size of 1 $\mu$m or more in the second active material layer.

The negative electrode, a lithium metal counter electrode, and an electrolyte were used to fabricate a half-cell. The electrolyte was prepared by dissolving 1.5 M $LiPF_6$ in a mixed solvent of ethylene carbonate, ethylmethyl carbonate, and dimethyl carbonate (in a volume ratio of 20:10:70).

**Example 2**

A negative electrode and a half-cell were fabricated by the same procedure as in Example 1, except that the pressurization was carried out under a condition of a first reduction rate of 60% (based on the desired thickness reduction rate of 100%) and a second reduction rate of 100%. In the negative electrode, pores including macropores having a size of 1 $\mu$m or more were formed in the second active material layer.

**Example 3**

A negative electrode and a half-cell were fabricated by the same procedure as in Example 1, except that the pressurization was carried out under a condition of a first reduction rate of 90% (based on the desired thickness reduction rate of 100%) and a second reduction rate of 100%. In the negative electrode, pores including macropores having a size of 1 $\mu$m or more were formed in the second active material layer.

**Example 4**

A negative electrode and a half-cell were fabricated by the same procedure as in Example 1, except that the pressurization was carried out under a condition of a first reduction rate of 30% (based on the desired thickness reduction rate of 100 %), a second reduction rate of 60%, and a third reduction rate of 100%. In the negative electrode, pores including macropores having a size of 1 $\mu$m or more were formed in the second active material layer.

**Comparative Example 1**

98 wt% of a mixture of artificial graphite and natural graphite, 1 wt% of a styrene-butadiene rubber, and 1 wt% of carboxymethyl cellulose were mixed together in a water solvent to prepare a first active material layer composition.

98 wt% of a mixture of artificial graphite and natural graphite, 1 wt% of a styrene-butadiene rubber, and 1 wt% of carboxymethyl cellulose were mixed together in a water solvent to prepare a second active material layer composition.

On a Cu foil current collector, the first active material layer composition was coated and dried. Thereafter, the second active material layer composition was coated on the dried product and dried. The resulting product was pressurized under a condition of a first reduction rate of about 90% (based on the desired thickness reduction rate 100%), and a second reduction rate of about 100% to prepare a negative electrode including a first active material layer having an 80 $\mu$m thickness and a second active material having an 80 $\mu$m thickness, formed on the current collector.

This procedure prepared pores including macropores having a size of 1 $\mu$m or more in the second active material layer.

The negative electrode, a lithium metal counter electrode, and an electrolyte were used to fabricate a half-cell. The electrolyte was prepared by dissolving 1.5 M $LiPF_6$ in a mixed solvent of ethylene carbonate, ethylmethyl carbonate, and dimethyl carbonate (in a volume ratio of 20:10:70).

**Comparative Example 2**

98 wt% of natural graphite, 1 wt% of a styrene-butadiene rubber, and 1 wt% of carboxymethyl cellulose were mixed together in a water solvent to prepare a first active material layer composition.

98 wt% of artificial graphite, 1 wt% of a styrene-butadiene rubber, and 1 wt% of carboxymethyl cellulose were mixed together in a water solvent to prepare a second active material layer composition.

On a Cu foil current collector, the first active material layer composition was coated and dried. Thereafter, the second active material layer composition was coated on the dried product and dried.

The resulting product was pressurized under a condition of a first reduction rate of about 100% (based on the desired thickness reduction rate 100%) to prepare a negative electrode including a first active material layer having an 80 $\mu$m thickness and a second active material having an 80 $\mu$m thickness, formed on the current collector.

This procedure prepared pores including macropores having a size of 1 $\mu$m or more in the second active material layer.

The negative electrode, a lithium metal counter electrode, and an electrolyte were used to fabricate a half-cell. The electrolyte was prepared by dissolving 1.5 M $LiPF_6$ in a mixed solvent of ethylene carbonate, ethylmethyl carbonate, and dimethyl carbonate (in a volume ratio of 20:10:70).

**Comparative Example 3**

98 wt% of a mixture of artificial graphite and natural graphite, 1 wt% of a styrene-butadiene rubber, and 1 wt% of carboxymethyl cellulose were mixed together in a water solvent to prepare a first active material layer composition.

98 wt% of a mixture of artificial graphite and natural graphite, 1 wt% of a styrene-butadiene rubber, and 1 wt% of carboxymethyl cellulose were mixed together in a water solvent to prepare a second active material layer composition.

On a Cu foil current collector, the first active material layer composition was coated and dried. Thereafter, the second active material layer composition was coated on the dried product and dried. The resulting product was pressurized under a condition of a first reduction rate of about 100% (based on the desired thickness reduction rate 100%) to prepare a negative electrode including a first active material layer having an 80 $\mu$m thickness and a second active material having an 80 $\mu$m thickness, formed on the current collector.

This procedure prepared pores including macropores having a size of 1 $\mu$m or more in the second active material layer.

The negative electrode, a lithium metal counter electrode, and an electrolyte were used to fabricate a half-cell. The electrolyte was prepared by dissolving 1.5 M $LiPF_6$ in a mixed solvent of ethylene carbonate, ethylmethyl carbonate, and dimethyl carbonate (in a volume ratio of 20:10:70).

**Experimental Example 1) Evaluation of porosity**

The total porosity (total porosity in the negative active material layer) of the negative electrode according to Examples 1 to 4 and Comparative Examples 1 to 3, and the porosity of the macropores having a size of 1 $\mu$m or more, were measured via mercury intrusion porosimetry. The results are shown in Table 1.

From the measured total porosity and porosity of the macropores, a ratio of the porosity of the macropores relative to the total porosity 100% were obtained by Equation 1. The results are shown in Table 1, as a relative porosity of the

macropores.

## Equation 1

Relative porosity of macropores (%)=(porosity of macropores)/total porosity)

**Experimental Example 3) Evaluation chargeability)**

The half-cells according to Examples 1 to 4 and Comparative Examples 1 to 3 were, at a room temperature (25 °C, RT), once charged at 0.1 C and discharged at 0.5 C, once charged at 1 C and discharged at 0.5 C, once charged at 2 C and discharged at 0.5 C, and once charged at 3 C and discharge at 0.5 C. A charge and discharge condition at each C-rate were as below.

The charge capacity at each C-rate was measured to calculate a ratio of the capacity at each rate relative to the capacity at 0.1 C. The results are shown in Table 1, as a CC chargeability.

Charge: constant current/constant voltage, 0.5 C, 4.25 V, 0.05 C cut-off, pausing for 10 minutes

Discharge: constant current 0.5 C 2.8 V cut-off, pausing for 10 minutes

**Experimental Example 2) Evaluation of cycle-life characteristic**

The half-cells according to Examples 1 to 4 and Comparative Examples 1 to 3 were charged and discharged at a room temperature (25 °C, RT) under the following condition for 100 cycles. A ratio of charge capacity at 100th cycles relative to charge capacity at 1st cycle was obtained. The results are shown in Table 1, as a capacity retention.

Charge: constant current/constant voltage, 0.5 C, 4.25 V, 0.05 C cut-off, pausing for 10 minutes

Discharge: constant current 0.5 C 2.8 V cut-off, pausing for 10 minutes

Table 1

|  | Total porosity (%) | Porosity of macropores (%) | Relative porosity of macropores (%) | CC chargeability (%) | | | Capacity retention (%) |
|---|---|---|---|---|---|---|---|
|  |  |  |  | 1C | 2C | 3C |  |
| Example 1 | 21.3 | 6.5 | 30.4 | 70.3 | 35.7 | 16.2 | 87.3 |
| Example 2 | 21.0 | 5.3 | 25.2 | 65.7 | 32.2 | 14.5 | 85.6 |
| Example 3 | 21.1 | 4.9 | 23.2 | 64.1 | 29.4 | 13.8 | 84.7 |
| Example 4 | 19.7 | 5.7 | 29.1 | 66.2 | 33.0 | 15.8 | 85.0 |
| Comparative Example 1 | 18.4 | 3.5 | 19.0 | 61.5 | 26.1 | 10.7 | 82.0 |
| Comparative Example 2 | 17.9 | 2.3 | 12.7 | 55.4 | 25.4 | 10.2 | 73.9 |
| Comparative Example 3 | 20.0 | 2.0 | 10.2 | 48.3 | 22.7 | 8.9 | 72.5 |

As shown in Table 1, the cells of Examples 1 to 4 in which the relative porosity of the macropores (porosity of the macropores based on the total porosity 100%) is 20% or more exhibited excellent high-rate chargeability characteristic and capacity retention.

Whereas, Comparative Example 1 in which the relative porosity of the macropores was less than 20% and included a single layer (i.e. the first and second active material layer compositions were the same), exhibited degraded high-rate chargeability characteristics and capacity retention. Comparative Examples 2 and 3 in which the negative active material layers were two layers, but the relative porosity of the macropores was less than 20%, exhibited extremely deteriorated high-rate chargeability characteristic and capacity retention.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the scope of the appended claims, and equivalents thereof. Therefore, the aforementioned embodiments should be understood to be examples but not limiting the present disclosure in any way.

**Claims**

1.  A negative electrode for a rechargeable lithium battery, comprising:

    a current collector; and
    a negative active material layer comprising a first active material layer in contact with the current collector and a second active material layer on the first active material layer,
    wherein the first active material layer and the second active material layer comprises pores and at least one selected from the first active material layer and the second active material layer comprises macropores having a size of about 1 $\mu$m or more and a porosity of the macropores is about 20% or more based on a total porosity 100% of the negative active material layer.

2.  The negative electrode for a rechargeable lithium battery as claimed in claim 1, wherein the porosity of the macropores is about 20% about 35% based on the total porosity 100% of the negative active material layer.

3.  The negative electrode for a rechargeable lithium battery as claimed in claim 1, wherein the porosity of the macropores is about 23% about 32% based on the total porosity 100% of the negative active material layer.

4.  The negative electrode for a rechargeable lithium battery as claimed in any one of claims 1 to 3, wherein the macropores have a size of about 1 $\mu$m to about 5 $\mu$m.

5.  The negative electrode for a rechargeable lithium battery as claimed in any one of claims 1 to 4, wherein the total porosity of the negative active material layer is about 15% to about 30%.

6.  The negative electrode for a rechargeable lithium battery as claimed in any one of claims 1 to 5, wherein:

    (i) the first active material layer comprises the macropores; and/or
    (ii) the second active material layer comprises the macropores.

7.  The negative electrode for a rechargeable lithium battery as claimed in any one of claims 1 to 6, wherein a thickness ratio of the first active material layer to the second active material layer is about 5:5 to about 7:3.

8.  The negative electrode for a rechargeable lithium battery as claimed in any one of claims 1 to 7, wherein:

    (i) the first active material layer has a thickness of about 50 $\mu$m to about 100 $\mu$m; and/or
    (ii) the second active material layer has a thickness of about 50 $\mu$m to about 100 $\mu$m.

9.  The negative electrode for a rechargeable lithium battery as claimed in any one of claims 1 to 8, wherein each of the first active material layer and the second active material layer comprises a negative active material comprising a carbon-based negative active material, a Si-based negative active material, or a combination thereof.

10. The negative electrode for a rechargeable lithium battery as claimed in claim 9, wherein the negative active material comprises the carbon-based negative active material.

11. The negative electrode for a rechargeable lithium battery as claimed in claim 10, wherein the carbon-based negative active material comprises crystalline carbon, optionally wherein the crystalline carbon comprises natural graphite, artificial graphite, or a combination thereof.

12. The negative electrode for a rechargeable lithium battery as claimed in any one of claims 1 to 11, wherein the first active material layer comprises a natural graphite negative active material and the second active material layer comprises an artificial graphite negative active material.

13. The negative electrode for a rechargeable lithium battery as claimed in any one of claims 1 to 12, wherein the negative electrode is prepared by coating a first active material layer composition on the current collector and drying to prepare a first active material dry layer;

coating a second active material layer composition on the first active material dry layer and drying to a second active material dry layer on the first active material layer dry layer; and
multiple-pressing the first active material dry layer and the second active material dry layer.

14. The negative electrode for a rechargeable lithium battery as claimed in claim 13, wherein the multiple-pressing is carried out by pressing at least two times, optionally wherein the multiple-pressing is carried out by pressing two time to three times.

15. A rechargeable lithium battery, comprising:

the negative electrode as claimed in any one of claims 1 to 14;
a positive electrode comprising a positive active material; and
a non-aqueous electrolyte.

# FIG. 1

# FIG. 2

<u>100</u>

EP 4 557 389 A1

# FIG. 3

# FIG. 4

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/290948 A1 (MATSUO YUTA [JP] ET AL) 14 September 2023 (2023-09-14) | 1,4-7, 9-15 | INV. H01M4/04 |
| A | * examples 1-3 * <br> * figures 7,8 * <br> * table 1 * | 2,3,8 | H01M4/133 <br> H01M4/1393 <br> H01M4/36 <br> H01M4/583 |
| | ----- | | |
| X | EP 3 869 586 A1 (MURATA MANUFACTURING CO [JP]) 25 August 2021 (2021-08-25) <br> * claim 8 * <br> * figure 3 * <br> * table 1 * | 1,4-15 | H01M10/0525 <br> H01M4/02 |
| | ----- | | |
| X | US 2017/125788 A1 (AHN BYOUNG HOON [KR] ET AL) 4 May 2017 (2017-05-04) <br> * claim 1 * <br> * paragraph [0046] * | 1,4,5, 13-15 | |
| | ----- | | |
| X | SHENG YANGPING ET AL: "Effect of Calendering on Electrode Wettability in Lithium-Ion Batteries", FRONTIERS IN ENERGY RESEARCH, vol. 2, 5 December 2014 (2014-12-05), XP093255659, CH ISSN: 2296-598X, DOI: 10.3389/fenrg.2014.00056 <br> * figures 5,6 * | 1,5, 9-11, 13-15 | TECHNICAL FIELDS SEARCHED (IPC) <br><br> H01M |
| | ----- | | |

The present search report has been drawn up for all claims

| Place of search | Date of completion of the search | Examiner |
|---|---|---|
| Munich | 4 March 2025 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .............................................................................................

& : member of the same patent family, corresponding document

EPO FORM 1503 03.82 (P04C01)

**EP 4 557 389 A1**

## ANNEX TO THE EUROPEAN SEARCH REPORT
## ON EUROPEAN PATENT APPLICATION NO.

EP 24 20 5120

04-03-2025

| Patent document cited in search report | Publication date | Patent family member(s) | | Publication date |
|---|---|---|---|---|
| US 2023290948 A1 | 14-09-2023 | CN | 116741926 A | 12-09-2023 |
| | | JP | 7475384 B2 | 26-04-2024 |
| | | JP | 2023132913 A | 22-09-2023 |
| | | US | 2023290948 A1 | 14-09-2023 |
| EP 3869586 A1 | 25-08-2021 | CN | 112805849 A | 14-05-2021 |
| | | EP | 3869586 A1 | 25-08-2021 |
| | | JP | 7074203 B2 | 24-05-2022 |
| | | JP | WO2020080245 A1 | 02-09-2021 |
| | | US | 2021242489 A1 | 05-08-2021 |
| | | WO | 2020080245 A1 | 23-04-2020 |
| US 2017125788 A1 | 04-05-2017 | EP | 2797142 A1 | 29-10-2014 |
| | | PL | 2797142 T3 | 31-07-2019 |
| | | US | 2014287316 A1 | 25-09-2014 |
| | | US | 2017125788 A1 | 04-05-2017 |
| | | WO | 2014116029 A1 | 31-07-2014 |